# EUROPEAN PATENT SPECIFICATION

(11) **EP 2 718 565 B1**
(45) Date of publication and mention of the grant of the patent: **09.09.2015**
(21) Application number: 12727631.9
(22) Date of filing: 05.06.2012
(51) Int. Cl.: F01K 3/12, F01K 7/40, F03G 6/06, F22B 1/00

(54) **SOLAR THERMAL POWER PLANT**
SOLARWÄRMEKRAFTANLAGE
CENTRALE HÉLIOTHERMIQUE

(30) Priority: 07.06.2011 EP 11168979
(43) Date of publication of application: 16.04.2014
(73) Proprietor: ALSTOM Technology Ltd, 5400 Baden (CH)
(72) Inventor: AGA, Vipluv, CH-8050 Zürich (CH); QUENAUT, Johann, Evesham Worcestershire WR11 2 AS (GB)
(74) Representative: Alstom Technology Ltd
(86) International application number: PCT/EP2012/060617
(87) International publication number: WO 2012/168251

(56) References cited:
- CN-A- 101 413 719

## Description

### Technical Field

The present disclosure relates generally to the field of concentrated solar power (CSP). Specific embodiments relate to a solar thermal power plant that utilises concentrated solar power to generate electricity and/or to an operating method for a solar thermal power plant.

### Technical Background

Concentrated solar power (CSP) involves the use of lenses, mirrors or other optical apparatus to focus solar radiation from a large incident area onto a small area. The energy from the solar radiation is then used to generate electrical power. Concentrated solar power has the potential to become an important energy source in the future.

There have been many proposals for concentrated solar power technology. The technology believed to have the most potential for providing high efficiency power generation is the concentrated solar thermal power plant, also commonly known as the central receiver solar thermal power plant, the heliostat power plant and the solar power tower. This technology involves the use of a solar radiation receiver, mounted atop a tower, to receive solar radiation that is reflected to be incident upon it by an array of tracking reflectors located in a solar field around the tower. The tracking reflectors are typically heliostats and the array of heliostats is commonly referred to as a heliostat field.

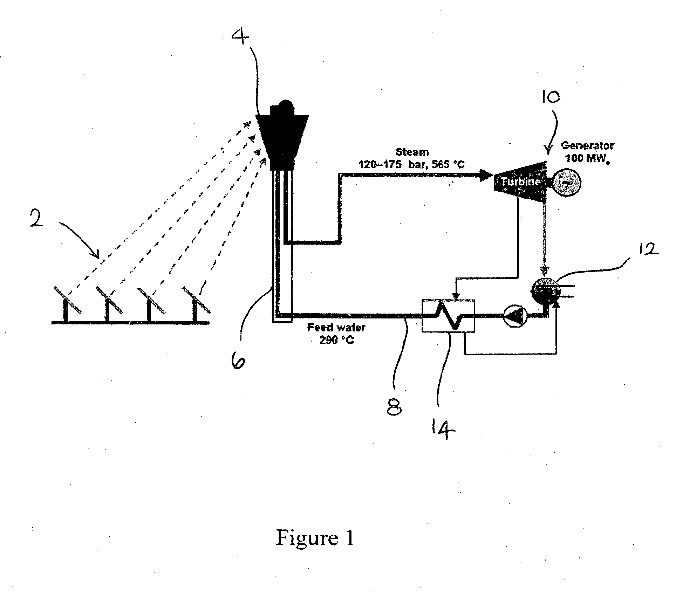

Figure 1 is a diagrammatic illustration of a conventional direct steam concentrated solar thermal power plant in which solar radiation is reflected by a heliostat field 2 to be incident upon a solar radiation receiver 4 mounted atop a tower 6. The reflected solar radiation directly heats water circulating through the solar radiation receiver 4. This generates superheated steam which is supplied to a power generation circuit 8 to drive a steam turbine generator set 10, and thereby generate electrical power, in a well-known manner using the Rankine cycle. In addition to the steam turbine generator set 10, the power generation circuit 8 includes an air-cooled condenser 12 and a feed water heater 14.

Direct steam concentrated solar thermal power plants can only operate effectively during daylight hours at times when the available solar radiation reflected by the heliostat field 2 to be incident upon the solar radiation receiver 4 is sufficient to generate superheated steam at the required pressure and temperature in the power generation circuit 8. This is because the high pressure and high temperature steam cannot be stored easily for later use.

In order to overcome this drawback, direct steam concentrated solar thermal power plants with energy storage capability have been proposed. These plants use high specific heat capacity thermal energy storage fluid, typically molten salt or a mixture of different molten salts, for energy storage. Thermal energy is stored during a charging cycle by heating the molten salt and the thermal energy is subsequently recovered during a discharging cycle to heat water, and thereby generate steam. The generated steam is then used to drive a steam turbine generator set to generate electrical power.

During the charging cycle, a proportion of superheated steam generated by the solar radiation receiver is supplied directly to the steam turbine generator set for electrical power generation. In this sense, the solar thermal power plant operates much like the conventional direct steam solar thermal power plant described above with reference to Figure 1. The remaining proportion of superheated steam is supplied to a first heat exchanger which extracts thermal energy from the superheated steam and transfers it to the molten salt. The heated molten salt is stored in an insulated storage container. During the discharging cycle when superheated steam cannot be supplied directly by the solar radiation receiver to the steam turbine generator set for electrical power generation due to a lack of reflected solar radiation incident upon the solar radiation receiver, thermal energy is recovered from the hot molten salt by a second heat exchanger and the recovered thermal energy is used to heat water, and thereby generate superheated steam. As indicated above, this superheated steam is supplied to the steam turbine generator set for electrical power generation.

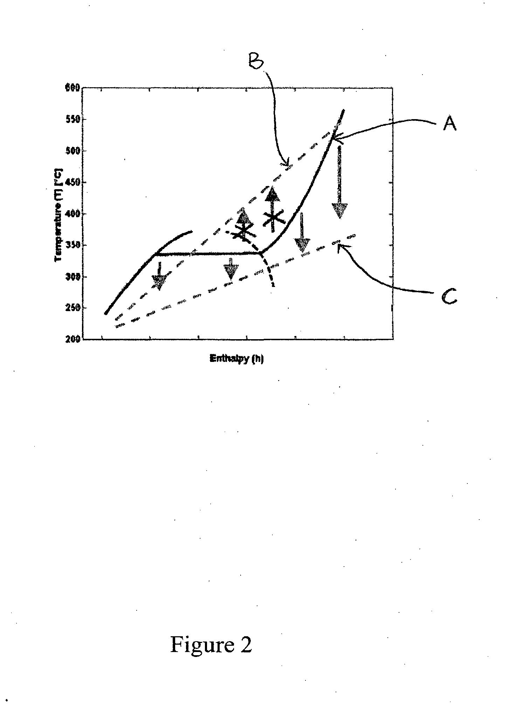

In order for solar thermal power plants of this type to operate at maximum efficiency, the temperature and pressure of the steam that is generated during the discharging cycle should preferably be substantially the same as the temperature and pressure of the steam that is generated by the solar radiation receiver during daylight hours and supplied directly to the steam turbine generator set for electrical power generation. However, because of the manner in which the thermal energy storage fluid is heated by recovering thermal energy from the steam in a heat exchanger, the maximum temperature that can be attained by the thermal energy storage fluid is significantly less than the maximum temperature of the steam from which energy is recovered. This results in what is known as a 'pinch point loss' and occurs because as the superheated steam cools in the heat exchanger, it changes state to a saturated vapour. During this change of state when latent heat is released, the temperature of the steam does not decrease but the temperature of the thermal energy storage fluid, molten salt, increases monotonically. Due to this mismatch of thermal behaviour between the two fluids in the heat exchanger, the highest temperature that the molten salt may attain is much lower than the temperature of the incoming superheated steam, leading to reduced temperature recovery. The effect of this 'pinch point loss' is illustrated by the temperature-enthalpy (T-h) diagram shown in Figure 2 where the arrows are indicative of the transfer of thermal energy from the steam (curve A) to the thermal energy storage fluid. The thermal energy storage fluid would ideally be heated according to line B as the steam cools. However, because of the latent heat phase during steam cooling (the relatively flat part of curve A), the thermal energy storage fluid is heated according to line C and, thus, attains a significantly lower maximum temperature than the ideal maximum temperature indicated by line B.

Consequently, when thermal energy is subsequently recovered from the thermal energy storage fluid during the discharging cycle to generate steam for the steam turbine generator set, the generated steam attains a significantly lower temperature and pressure than the superheated steam that was used to heat the molten salt. This reduces the efficiency of this type of solar thermal power plant. In some circumstances, the lower steam pressure in the power generation circuit may be insufficient to run the steam turbine generator set at full load, meaning that the power generation requirement cannot be met.

CN 101 413 719 A discloses a tower-typed solar energy thermal power generation system with two-stage thermal storage. The system comprises a photo-thermal conversion subsystem, a two-stage thermal storage subsystem and a power subsystem. The photo-thermal conversion subsystem is used for receiving and converging solar radiation energy, converting the received solar radiation energy into heat energy, and transmitting the heat energy to the power subsystem or the two-stage thermal storage subsystem.

It would, therefore, be desirable to provide a solar thermal power plant having improved operational efficiency.

### Summary of the Disclosure

According to one aspect, there is provided a solar thermal power plant comprising:-
a tower;
a plurality of heliostats surrounding the tower and forming a heliostat field;
a solar radiation receiver mounted on the tower to receive solar radiation reflected by the heliostat field;
a power generation circuit including a steam turbine for driving an electrical generator to produce electrical power, water circulating through the solar radiation receiver being capable of being heated directly by solar radiation reflected onto the solar radiation receiver by the heliostat field to generate superheated steam to drive the steam turbine;
an energy storage circuit including a thermal energy storage fluid and a heat exchanger for receiving a proportion of superheated steam diverted from the power generation circuit and for transferring heat from the diverted superheated steam to the thermal energy storage fluid;
wherein the heat exchanger is operable to cool the diverted superheated steam to a temperature above its saturation temperature so that the steam exiting the heat exchanger is in its superheated state.

According to a second aspect, there is provided a method for operating a solar thermal power plant comprising:-
a tower;
a plurality of heliostats surrounding the tower and forming a heliostat field;
a solar radiation receiver mounted on the tower to receive solar radiation reflected by the heliostat field;
a power generation circuit including a steam turbine for driving an electrical generator to produce electrical power; and
an energy storage circuit including a thermal energy storage fluid and a heat exchanger for receiving superheated steam diverted from the power generation circuit and for transferring heat from the superheated steam to the thermal energy storage fluid;
wherein the operating method comprises:-
   circulating water through the solar radiation receiver so that the water is heated directly by solar radiation reflected onto the solar radiation receiver by the heliostat field to generate superheated steam;
   supplying a proportion of the superheated steam to the steam turbine in the power generation circuit;
   diverting a proportion of the superheated steam to the heat exchanger in the energy storage circuit; and
   cooling the diverted superheated steam in the heat exchanger to a temperature above its saturation temperature so that the steam exiting the heat exchanger is in its superheated state.

Because the superheated steam diverted to the heat exchanger is cooled to a temperature above its saturation temperature (for a given steam pressure), it does not change state to a saturated vapour and thermal energy is transferred from the steam to the thermal energy storage fluid only whilst the steam is in its superheated state. The 'pinch point loss' described above, which arises in conventional solar thermal power plants when superheated steam is cooled to a temperature at or below its saturation temperature and changes state to a saturated vapour, is thus eliminated thereby maximising heat transfer from the steam to the thermal energy storage fluid. The operational efficiency of the solar thermal power plant is thus significantly improved.

The amount of superheated steam diverted from the power generation circuit to the energy storage circuit can be varied depending on the amount of available solar radiation reflected by the heliostat field onto the solar radiation receiver. In particular, during sunny conditions when the amount of reflected solar radiation exceeds the amount necessary to heat the water circulating through the solar radiation receiver to generate superheated steam to operate the steam turbine at full load, excess superheated steam arising from the excess solar radiation is diverted during a charging cycle to the heat exchanger in the energy storage circuit.

The solar thermal power plant may include a preheat device for supplying preheated feed water to the solar radiation receiver. The use of preheated feed water in the solar radiation receiver reduces thermal shock and generally increases the operating efficiency of the solar thermal power plant.

The preheat device may comprise a feed water heater. The feed water heater may be operable to mix the superheated steam from the heat exchanger with water to provide the preheated feed water. By mixing the superheated steam with water at a relatively low temperature, the superheated steam can be cooled to a temperature below its saturation temperature so that heat can be transferred from the steam to the water. The superheated steam normally changes state to saturated water as it cools. The resultant preheated feed water can be pumped to the solar radiation receiver atop the tower in a simple manner using a feed water pump.

The preheat device may alternatively comprise a steam ejector which is operable to mix the superheated steam from the heat exchanger with water at relatively low temperature. The resultant fluid stream from the steam ejector can be injected to the solar radiation receiver atop the tower. A steam ejector is a well-known device, which mixes the superheated steam with the water and produces the mixed out water with a high enough pressure that it may be injected into the solar radiation receiver atop the tower. For high-pressure steam, a steam ejector may in certain cases be more efficient for mixing than a simple feed water heater alone.

The preheat device may be operable to mix the superheated steam from the heat exchanger with condensed water from the steam turbine to provide the preheated feed water. The condensed water arising from the subsequent condensing of steam expanded in the steam turbine is, thus, advantageously re-used in a closed cycle. Normally, the condensed water is supplied directly from a condenser downstream of the steam turbine to the preheat device during the charging cycle, when a proportion of the superheated steam is diverted from the power generation circuit to the energy storage circuit.

In circumstances in which the steam pressure is in the region of 140 bar, the heat exchanger may be operable to cool the diverted superheated steam to a temperature between about 330°C and 350°C at the outlet from the heat exchanger. The steam exiting the heat exchanger remains in a superheated state at the aforesaid pressure and range of temperatures.

The temperature of the water supplied to the preheat device, for example condensed water from the condenser downstream of the steam turbine, may be between about 50°C and 80°C.

When superheated steam in the aforesaid temperature range between about 330°C and 350°C is mixed in the preheat device with relatively cool water at a temperature between about 50°C and 80°C, the temperature of the resulting preheated feed water may be between about 240°C and 320°C. The actual temperatures will vary in accordance with the amount of superheated steam that is diverted from the power generation circuit to the energy storage circuit (i.e. the ratio of the mass flow rate of superheated steam used in the power generation circuit for electrical power generation to the mass flow rate of superheated steam diverted to the energy storage circuit).

As an alternative to using the superheated steam exiting the heat exchanger for feed water preheating for example in a feed water heater or steam ejector, the solar thermal power plant could be arranged so that the superheated steam exiting the heat exchanger is supplied directly to the steam turbine for expansion in the steam turbine. In these circumstances, the superheated steam could be injected directly into one of the stages of the steam turbine for expansion in the steam turbine stage. Since the superheated steam exiting the heat exchanger is no longer used for feed water preheating, the solar thermal power plant may include a further feed water heater to provide preheated feed water for the solar radiation receiver and the further feed water heater may be arranged to mix condensed water from the steam turbine with steam extracted between one or more stages of the steam turbine.

One embodiment of the operating method according to the second aspect may comprise mixing the superheated steam exiting the heat exchanger with water to provide preheated feed water for the solar radiation receiver. Normally, the preheated feed water is heated in the solar radiation receiver during said circulating step to generate the superheated steam. Thermal shock in the solar radiation receiver is, thus, minimised and the operating efficiency of the solar thermal power plant is increased as mentioned above.

The operating method may comprise mixing the superheated steam exiting the heat exchanger with condensed water produced by condensing steam expanded in the steam turbine, to thereby provide the preheated feed water. As indicated above, the condensed water may be supplied directly from the condenser without any intermediate preheating.

The superheated steam and water are normally mixed in a feed water heater. The feed water heater could be an open feed water heater or a closed feed water heater, although an open feed water heater may be preferred.

The superheated steam and water could alternatively be mixed using a steam ejector. This would provide a higher pressure stream of resultant mixed out fluid. In certain steam operating conditions and plant sizes, mixing could be preferred using a steam ejector rather than a feed water heater.

An alternative embodiment of the operating method according to the second aspect may comprise supplying the superheated steam exiting the heat exchanger to the steam turbine for expansion in the steam turbine. Expansion of the superheated steam in the steam turbine supports the generation of electrical power and increases the operational efficiency of the solar thermal power plant.

In this alternative embodiment, condensed water from the condenser located downstream of the steam turbine may be mixed with steam extracted between one or more stages of the steam turbine to provide preheated feed water for the solar radiation receiver.

The thermal energy storage fluid is typically a liquid. The thermal energy storage liquid may be a molten salt, which may for example be capable of being heated to a maximum operating temperature in the region of 580°C for the effective storage of thermal energy. The molten salt may be a nitrate salt or a carbonate salt, although other forms of molten salt, such as mixtures of salts, are entirely within the scope of the present disclosure.

The energy storage circuit may include two fluid storage locations for the thermal energy storage fluid, one of which may be a high temperature fluid storage tank and the other of which may be a relatively lower temperature fluid storage tank. The energy storage circuit may alternatively include both fluid storage locations in a single thermocline fluid storage tank, for example with high temperature fluid at the top and low temperature fluid at the bottom, although these single tank storage solutions are still under development. The heat exchanger may be positioned in the energy storage circuit between the high temperature and low temperature fluid storage locations, enabling thermal energy to be transferred from the superheated steam to the thermal energy storage fluid as it circulates in the energy storage circuit from the low temperature fluid storage location to the high temperature fluid storage location. The energy storage circuit may include a further heat exchanger which may be operable to recover thermal energy from the thermal energy storage fluid as it circulates in the energy storage circuit from the high temperature fluid storage location to the low temperature fluid storage location.

The thermal energy recovered by the further heat exchanger may be used for any desired purpose, but is most conveniently used to generate steam for the power generation circuit of the solar thermal power plant, during the discharging cycle at times when insufficient solar radiation is reflected onto the solar radiation receiver to generate superheated steam at the required temperature and pressure for the power generation circuit, for example during non-daylight hours or cloudy conditions. Accordingly, the further heat exchanger may be arranged to generate superheated steam for the power generation circuit and may be arranged to supply the superheated steam to the power generation circuit for expansion in the steam turbine.

### Brief Description of the Drawings

Figure 1 is a diagrammatic illustration of a conventional direct steam concentrated solar thermal power plant;
Figure 2 is a temperature-enthalpy (T-h) diagram for a conventional direct steam solar thermal power plant illustrating the transfer of thermal energy from steam to a thermal energy storage fluid during a charging cycle;
Figure 3 is a diagrammatic illustration of a solar thermal power plant according to the present disclosure;
Figure 4 is a temperature-enthalpy (T-h) diagram for the solar thermal power plant shown in Figure 3 illustrating the transfer of thermal energy from superheated steam to a thermal energy storage fluid during a charging cycle; and
Figure 5 is a temperature-enthalpy (T-h) diagram for the solar thermal power plant shown in Figure 3 illustrating the transfer of thermal energy from the thermal energy storage fluid to water to produce superheated steam during a discharging cycle.

### Detailed Description of Preferred Embodiments

Preferred embodiments will now be described by way of example only and with reference to the accompanying drawings.

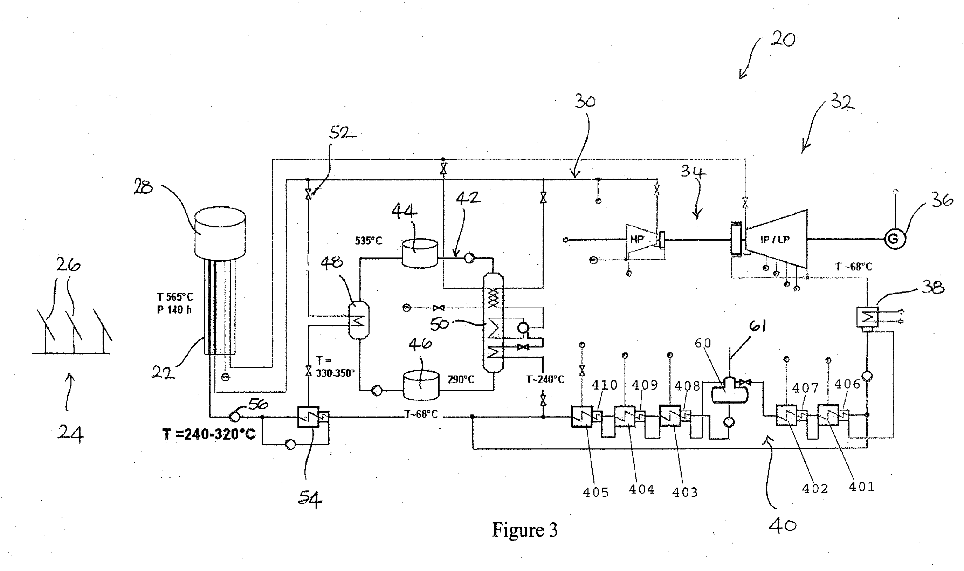

Referring to Figure 3, there is shown a solar thermal power plant 20 comprising a tower 22 and a heliostat field 24 surrounding the tower 22. The heliostat field 24 comprises a plurality of individual tracking heliostats 26 and the position of each heliostat 26 is adjusted by a suitably programmed computer controlled tracking system to track the movement of the sun. A solar radiation receiver 28 is mounted on top of the tower 22 and solar radiation is reflected by the heliostat field 24 to be incident upon the solar radiation receiver 28.

The power plant 20 includes a power generation steam circuit 30 for electrical power generation. The power generation steam circuit 30 includes a power generating system 32 through which superheated steam is circulated to thereby generate electrical power, and the power generating system 32 typically comprises a steam turbine 34 having high pressure (HP) and intermediate and low pressure (IP/LP) stages through which the superheated steam is expanded, and an electrical generator 36 driven by the steam turbine 34. The power generation steam circuit 30 also includes an air-cooled condenser 38 and a feed water heater 40.

The power plant 20 includes an energy storage circuit 42 which utilises molten salt as a thermal energy storage fluid. The energy storage circuit 42 includes an insulated hot salt storage tank 44 and a relatively cool salt storage tank 46. A first heat exchanger 48 is provided to transfer heat to the cool molten salt as it flows in the energy storage circuit 42 from the cool storage tank 46 to the holt salt storage tank 44 and a second heat exchanger 50 is provided to recover heat from the hot molten salt as it flows in the energy storage circuit 42 from the hot salt storage tank 44 to the cool salt storage tank 46.

The solar thermal power plant 20 can be operated in different modes depending on the prevailing power generation requirements and the amount of solar radiation that is available.

During daylight hours, the power plant 20 can be operated in a combined generation/storage, operating mode, provided that there is a sufficient amount of solar radiation. In this operating mode, water circulating in the solar radiation receiver 28 is heated by thermal energy arising from the solar radiation reflected by the heliostat field 24 to be incident upon the solar radiation receiver 28. This generates superheated steam, typically at a pressure in the region of 120 to 175 bar and a temperature in the region of 560°C to 570°C. In the illustrated embodiment, the generated superheated steam has a pressure of about 140 bar and a temperature of about 565°C.

In order to directly heat the water circulating in the solar radiation receiver 28, the solar radiation receiver 28 typically includes a plurality of series-connected receiver panels, which may, for example, be arranged circumferentially around the solar radiation receiver 28. Each of the receiver panels comprises a plurality of parallel vertically arranged, small-diameter, tubes that are connected at their upper and lower ends by headers. Water circulating in the solar radiation receiver 28 flows through the tubes in the receiver panels where it is directly heated by the thermal energy arising from the solar radiation reflected by the heliostat field 24 to be incident upon the receiver panels. Although multiple circumferentially arranged receiver panels may be preferred, a single receiver panel could be provided.

A major proportion of the mass flow rate of superheated steam is supplied directly to the steam turbine generator set for expansion in the steam turbine 34. As indicated above, expansion of the superheated steam in the steam turbine 34 drives the electrical generator 36, thereby generating electrical power.

The remaining proportion of the mass flow rate of superheated steam is diverted from the power generation circuit 30 to the energy storage circuit 42 via a diverter valve 52. The diverter valve 52 can be controlled to vary the ratio between the mass flow rate of superheated steam supplied directly to the steam turbine 34 for electrical power generation and the mass flow rate of superheated steam diverted to the energy storage circuit 42. In general, it is possible to divert a larger proportion of the superheated steam generated by the solar radiation receiver 28 to the energy storage circuit 42 during sunny periods when the amount of available solar radiation, and hence superheated steam, exceeds that which is necessary to operate the steam turbine 34 at full load.

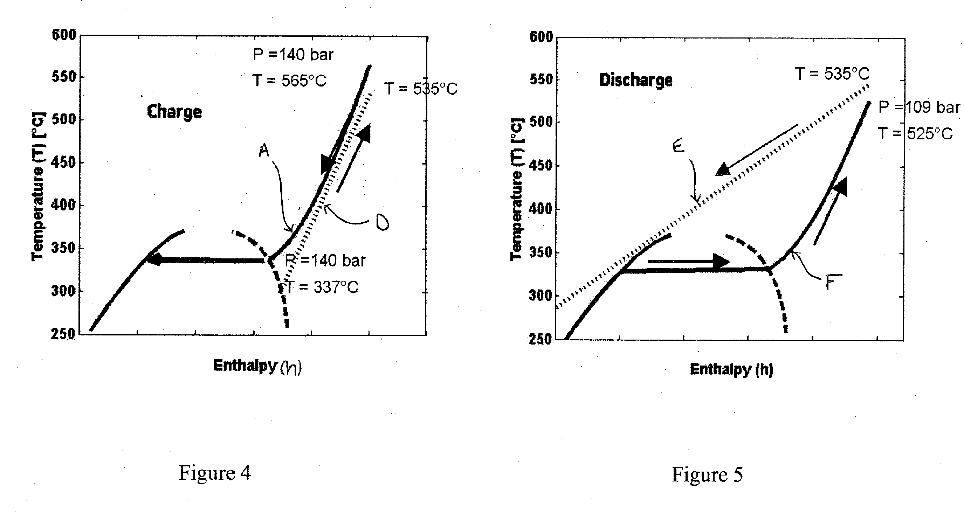

The superheated steam diverted to the energy storage circuit 42 is fed through the first heat exchanger 48 during a charging cycle. The superheated steam is cooled in the first heat exchanger 48 and heat is transferred from the superheated steam to the molten salt as it circulates from the cool salt storage tank 46 to the hot salt storage tank 44. In accordance with the present disclosure, the superheated steam is cooled in the first heat exchanger 48 to a temperature above its saturation temperature so that the steam exiting the first heat exchanger 48 remains in its superheated state. As is clearly illustrated by the temperature-enthalpy (T-h) diagram shown in Figure 4, this innovative approach to heating the molten salt, during the charging cycle, maximises the heat transfer from the steam to the molten salt and significantly reduces the 'pinch point loss' described earlier in this specification with reference to the temperature-enthalpy (T-h) diagram of Figure 2. In particular, it will be seen from the temperature-enthalpy (T-h) diagram of Figure 4 that the T-h line (labelled D) for the molten salt is closely matched with the T-h line (labelled A) for the steam in its superheated state. Accordingly, the molten salt attains a maximum temperature which is close to the maximum temperature of the superheated steam. For example, when the superheated steam circulated through the heat exchanger (at a constant pressure of about 140 bar) has an inlet temperature of approximately 565°C and an outlet temperature of approximately 337°C, above its saturation temperature, the molten salt can attain a maximum temperature of 535°C. This is very close to the inlet temperature of the superheated steam.

In order to maximise the operational efficiency of the solar thermal power plant 20, the superheated steam from the outlet of the first heat exchanger 48 is supplied to a feed water heater 54 or other suitable preheat device which supplies preheated feed water to the solar radiation receiver. Superheated steam which has been expanded through the stages of the steam turbine 34 is supplied to the condenser 38 to produce water. In the illustrated embodiment, the temperature of the condensed water is approximately 68°C, but the temperature could be anywhere in the range from about 50°C to about 80°C. During the combined generation/storage operating mode, the condensed water bypasses the feed water heater 40 and is supplied directly to the feed water heater 54, without being preheated, where it is mixed with the superheated steam from the outlet of the first heat exchanger 48. Mixing of the superheated steam and relatively cool condensed water in the feed water heater 54 recovers further thermal energy from the superheated steam and heats the relatively cool condensed water to provide the preheated feed water. The preheated feed water is then simply pumped to the solar radiation receiver 28 by a feed water pump 56. In the illustrated embodiment, the temperature of the preheated feed water is between about 240°C and about 320°C, depending on the ratio between the mass flow rate of superheated steam supplied directly to the steam turbine 34 for electrical power generation and the mass flow rate of superheated steam diverted to the energy storage circuit 42. It is, of course, important that the temperature of the water at the outlet of the feed water heater 54 should not exceed the condensation temperature at the given pressure to ensure that the feed water pump 56 can be employed to supply the preheated feed water to the solar radiation receiver 28. The outlet water temperature can be higher in certain cases if a steam ejector is used as the preheat device instead of feed water heater 54.

At times when there is insufficient solar energy to directly heat the water circulating in the receiver panels of the solar radiation receiver 28 to provide steam at the desired pressure and temperature for efficient operation of the power plant 20 in the manner described above, the power plant 20 can be operated in an energy recovery mode to supply superheated steam to the power generating system 32. In this operating mode, the second heat exchanger 50 is used to recover thermal energy from hot molten salt during a discharging cycle as the hot molten salt flows from the hot salt storage tank 44 to the cool salt storage tank 46. This operating mode is typically used during non-daylight hours when solar radiation is not available to generate steam in the solar radiation receiver 28. It can, however, also be used during daylight hours if there is insufficient solar radiation to generate steam in the solar radiation receiver 28 at the desired pressure and temperature for the power generation circuit 30, for example during overcast conditions.

Because of the innovative approach outlined above that is used to heat the molten salt during the charging cycle, water circulating through the second heat exchanger 50 is heated more efficiently during the discharging cycle thereby generating superheated steam at a much higher temperature than is possible in the conventional solar thermal power plant described above. This is clearly illustrated by the temperature-enthalpy (T-h) diagram shown in Figure 5, where it can be seen that as the molten salt cools from its stored temperature of 535°C (line E) and heats the water circulating through the second heat exchanger 50 (line F), the superheated steam generated as a result of the heat transfer attains a temperature of 525°C at a pressure of 109 bar. This is close to the temperature of 565°C of the superheated steam originally used to heat the molten salt.

The superheated steam generated by heat transfer in the second heat exchanger 50 is supplied directly to the power generation circuit 30 where it is expanded in the steam turbine 34 to drive the electrical generator 36 and thereby generate electrical power. The expanded steam is supplied to the condenser 38 to produce feed water for recirculation to the solar tower. The condensed water is then supplied to the feed water heater 40, where it is heated by steam extracted from the steam turbine 34. The resulting preheated feed water is then supplied to the second heat exchanger 50 for further heating in the manner described above, thereby creating a closed cycle.

It will be appreciated that whilst the power plant 20 is operating in the energy recovery mode, the feed water heater 54 is inactive.

As will be understood by the skilled person, the feed water heater 40 comprises heat exchangers 401-405, where the feed water is heated by steam extracted from the steam turbine 34. In the illustrated embodiment, several feed water heating stages are used, in which each successive heat exchanger 401-405 uses steam bled from a different turbine stage in ascending order of pressure. It should also be noted that feed water heater 40 further utilizes the so-called "cascaded drains" principle, in which feed water flowing into each heat exchanger 401-405 is first passed through a respective reheat module 406-410 to reheat the steam/water that has drained through the heat exchanger and given up heat to the feed water. Thereafter, the drain is fed to a lower pressure feed water heater in the upstream direction relative to feed water flow. The aim of these measures is to reduce temperature differences between feed water heating stages and thereby increase thermodynamic efficiency in accordance with the Second Law of Thermodynamics.

It will further be seen from Figure 3 that drainage water from reheat module 408 is fed to a mixing vessel 60, where it is mixed with feed water from heat exchanger 402 and condensate from line 61, received from the steam turbine 34. Meanwhile the drainage from the first reheat module 406 is recycled into the feed water at the outlet from condenser 38.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments. Each feature disclosed in the specification, including the claims and drawings, may be replaced by alternative features serving the same, equivalent or similar purposes, unless expressly stated otherwise.

For example, during the combined generation/storage operating mode, the superheated steam from the first heat exchanger 48 could be supplied directly to the steam turbine 34 for expansion in the steam turbine 34. In this case, it will be understood that the superheated steam is used to directly support the generation of electrical power, rather than to preheat the feed water supplied to the solar radiation receiver 28.

The steam pressures and temperatures at different points in the solar thermal power plant 20 are provided for illustrative purposes only. It should be understood that other steam pressures and temperatures are entirely within the scope of the appended claims.

Although the thermal energy storage fluid is typically a molten salt, other thermal energy storage fluids having a high specific heat capacity could be employed.

In order to simplify the construction of the solar thermal power plants 20 described above with reference to Figure 3, the separate hot salt and relatively cool salt storage tanks 44, 46, respectively, could be replaced with a single thermocline molten salt storage tank. In a thermocline molten salt storage tank, hot molten salt is typically stored at the top of the tank and the cooler molten salt is typically stored at the bottom of the tank. In this case, the heat exchangers 48, 50 would be positioned in a circuit enabling circulation of the molten salt between the hot and cool storage locations.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A solar thermal power plant (20) comprising:-
a tower (22);
a plurality of heliostats (26) surrounding the tower and forming a heliostat field (24);
a solar radiation receiver (28) mounted on the tower (22) to receive solar radiation reflected by the heliostat field (24);
a power generation circuit (30) including a steam turbine (34) for driving an electrical generator (36) to produce electrical power, water circulating through the solar radiation receiver (28) being capable of being heated directly by solar radiation reflected onto the solar radiation receiver (28) by the heliostat field (24) to generate superheated steam to drive the steam turbine (34);
an energy storage circuit (42) including a thermal energy storage fluid and a heat exchanger (48) for receiving a proportion of superheated steam diverted from the power generation circuit (30) and for transferring heat from the diverted superheated steam to the thermal energy storage fluid;
**characterised in that** the heat exchanger (48) is operable to cool the diverted superheated steam to a temperature above its saturation temperature so that the steam exits the heat exchanger (48) in its superheated state.

2. A solar thermal power plant according to claim 1, wherein the heat exchanger (48) is operable to cool the diverted superheated steam to a temperature between about 330°C and 350°C at the exit from the heat exchanger (48) when the steam pressure is in the region of 140 bar.

3. A solar thermal power plant according to claim 1 or claim 2, wherein the solar thermal power plant (20) includes a preheat device (54) for supplying preheated feed water to the solar radiation receiver (28), the preheat device (54) being operable to mix the superheated steam from the heat exchanger (48) with water to provide the preheated feed water.

4. A solar thermal power plant according to claim 3, wherein the temperature of the preheated feed water supplied by the preheat device (54) to the solar radiation receiver (28) is between about 240°C and 320°C.

5. A solar thermal power plant according to claim 3 or claim 4, wherein the preheat device (54) is operable to mix the superheated steam from the heat exchanger (48) with condensed water from the steam turbine (34) to provide the preheated feed water.

6. A solar thermal power plant according to claim 5, wherein the condensed water is supplied from a condenser (38), positioned downstream of the steam turbine (34), directly to the preheat device (54).

7. A solar thermal power plant according to claim 5 or claim 6, wherein the temperature of the condensed water is between about 50°C and 80°C.

8. A solar thermal power plant according to claim 1 or claim 2, wherein the solar thermal power plant (20) is arranged to supply the superheated steam exiting the heat exchanger (48) to the steam turbine (34) for expansion in the steam turbine (34).

9. A method for operating a solar thermal power plant (20), the plant comprising:-
a tower (22);
a plurality of heliostats (26) surrounding the tower and forming a heliostat field (24);
a solar radiation receiver (28) mounted on the tower (22) to receive solar radiation reflected by the heliostat field (24);
a power generation circuit (30) including a steam turbine (34) for driving an electrical generator (36) to produce electrical power; and
an energy storage circuit (42) including a thermal energy storage fluid and a heat exchanger (48) for receiving superheated steam diverted from the power generation circuit (30) and for transferring heat from the superheated steam to the thermal energy storage fluid;
wherein the operating method comprises the steps of:-
circulating water through the solar radiation receiver (28) so that the water is heated directly by solar radiation reflected onto the solar radiation receiver (28) by the heliostat field (24) to generate superheated steam;
supplying a first proportion of the superheated steam to the steam turbine (34) in the power generation circuit (30); and
diverting a second proportion of the superheated steam to the heat exchanger (48) in the energy storage circuit (42);
**characterised in that** the diverted superheated steam is cooled in the heat exchanger (48) to a temperature above its saturation temperature so that the steam exits the heat exchanger (48) in its superheated state.

10. An operating method according to claim 9, wherein after the superheated steam exits the heat exchanger (48), the superheated steam is mixed with water to provide preheated feed water for the solar radiation receiver (28).

11. An operating method according to claim 10, wherein the superheated steam is mixed with condensed water from the steam turbine (34) to provide the preheated feed water.

12. An operating method according to claim 11, wherein the condensed water is supplied directly from the steam turbine (34), without preheating, for mixing with the superheated steam.

13. An operating method according to any of claims 10 to 12, wherein the superheated steam and water are mixed in a preheat device (54).

14. An operating method according to any of claims 10 to 13, wherein the preheated feed water is heated in the solar radiation receiver (28) during said circulating step to generate the superheated steam.

15. An operating method according to claim 9, wherein after the superheated steam exits the heat exchanger (48), the superheated steam is supplied to the steam turbine (34) for expansion therein.

## Patentansprüche

1. Solarwärmekraftanlage (20), welche Folgendes aufweist:
einen Turm (22);
mehrere Heliostate (26), die den Turm umgeben und ein Heliostat-Feld (24) bilden;
einen Solarstrahlungsempfänger (28), der an dem Turm (22) befestigt ist, zum Empfangen von Solarstrahlung, die durch das Heliostat-Feld (24) reflektiert wird;
eine Stromerzeugungsschaltung (30), die eine Dampfturbine (34) zum Antreiben eines elektrischen Generators (36) zum Erzeugen elektrischer Energie aufweist, wobei Wasser, das durch den Solarstrahlungsempfänger (28) zirkuliert, direkt durch Solarstrahlung, die durch das Heliostat-Feld (24) auf den Solarstrahlungsempfänger (28) reflektiert wird, erhitzt werden kann, um überhitzten Dampf zum Antreiben der Dampfturbine (34) zu erzeugen;
eine Energiespeicherschaltung (42), die ein thermisches Energiespeicherfluid und den Wärmetauscher (48) zum Empfangen eines Anteils des überhitzten Dampfes, der von der Stromerzeugungsschaltung (30) umgeleitet wird, und zum Übertragen von Wärme von dem umgeleiteten überhitzten Dampf auf das thermische Energiespeicherfluid aufweist;
**dadurch gekennzeichnet, dass** der Wärmetauscher (48) derart betreibbar ist, dass er den umgeleiteten überhitzten Dampf auf eine Temperatur oberhalb seiner Sättigungstemperatur abkühlt, sodass der Dampf in seinem überhitzten Zustand aus dem Wärmetauscher (48) austritt.

2. Solarwärmekraftanlage nach Anspruch 1, wobei der Wärmetauscher (48) derart betreibbar ist, dass er den umgeleiteten überhitzten Dampf bei Austritt aus dem Wärmetauscher (48) auf eine Temperatur zwischen etwa 330 °C und 350 °C abkühlt, wenn sich der Dampfdruck in der Region von 140 bar befindet.

3. Solarwärmekraftanlage nach Anspruch 1 oder 2, wobei die Solarwärmekraftanlage (20) eine Vorheizvorrichtung (54) zur Bereitstellung von vorerhitztem Speisewasser an den Solarstrahlungsempfänger (28) aufweist, wobei die Vorheizvorrichtung (54) derart betreibbar ist, dass sie den überhitzten Dampf von dem Wärmetauscher (48) mit Wasser mischt, um das vorerhitzte Speisewasser bereitzustellen.

4. Solarwärmekraftanlage nach Anspruch 3, wobei die Temperatur des vorerhitzten Speisewassers, das durch die Vorheizvorrichtung (54) an den Solarstrahlungsempfänger (28) bereitgestellt wird, zwischen etwa 240 °C und 320 °C liegt.

5. Solarwärmekraftanlage nach Anspruch 3 oder 4, wobei die Vorheizvorrichtung (54) derart betreibbar ist, dass sie den überhitzten Dampf von dem Wärmetauscher (48) mit kondensiertem Wasser von der Dampfturbine (34) mischt, um das vorerhitzte Speisewasser bereitzustellen.

6. Solarwärmekraftanlage nach Anspruch 5, wobei das kondensierte Wasser von einem Kondensator (38), der stromabwärts von der Dampfturbine (34) positioniert ist, direkt an die Vorheizvorrichtung (54) bereitgestellt wird.

7. Solarwärmekraftanlage nach Anspruch 5 oder 6, wobei die Temperatur des kondensierten Wassers zwischen etwa 50 °C und 80 °C liegt.

8. Solarwärmekraftanlage nach Anspruch 1 oder 2, wobei die Solarwärmekraftanlage (20) derart ausgelegt ist, dass sie den überhitzten Dampf, der aus dem Wärmetauscher (48) austritt, zur Ausdehnung in der Dampfturbine (34) an die Dampfturbine (34) bereitstellt.

9. Verfahren zum Betreiben einer Solarwärmekraftanlage (20), wobei die Anlage Folgendes aufweist:
einen Turm (22);
mehrere Heliostate (26), die den Turm umgeben und ein Heliostat-Feld (24) bilden;
einen Solarstrahlungsempfänger (28), der an dem Turm (22) befestigt ist, zum Empfangen von Solarstrahlung, die durch das Heliostat-Feld (24) reflektiert wird;
eine Stromerzeugungsschaltung (30), die eine Dampfturbine (34) zum Antreiben eines elektrischen Generators (36) zum Erzeugen elektrischer Energie aufweist; und
eine Energiespeicherschaltung (42), die ein thermisches Energiespeicherfluid und den Wärmetauscher (48) zum Empfangen von überhitztem Dampf, der von der Stromerzeugungsschaltung (30) umgeleitet wird, und zum Übertragen von Wärme von dem überhitzten Dampf auf das thermische Energiespeicherfluid aufweist;
wobei die Betriebsweise folgende Schritte aufweist:
Zirkulieren von Wasser durch den Solarstrahlungsempfänger (28), sodass das Wasser direkt durch Solarstrahlung, die durch das Heliostat-Feld (24) auf den Solarstrahlungsempfänger (28) reflektiert wird, erhitzt wird, um überhitzten Dampf zu erzeugen;
Bereitstellen eines ersten Anteils des überhitzten Dampfes an die Dampfturbine (34) in der Stromerzeugungsschaltung (30); und
Umleiten eines zweiten Anteils des überhitzten Dampfes an den Wärmetauscher (48) in der Energiespeicherschaltung (42);
**dadurch gekennzeichnet, dass** der umgeleitete überhitzte Dampf in dem Wärmetauscher (48) auf eine Temperatur oberhalb seiner Sättigungstemperatur abgekühlt wird, sodass der Dampf in seinem überhitzten Zustand aus dem Wärmetauscher (48) austritt.

10. Betriebsweise nach Anspruch 9, wobei der überhitzte Dampf, nachdem er aus dem Wärmetauscher (48) austritt, mit Wasser gemischt wird, um vorerhitztes Speisewasser für den Solarstrahlungsempfänger (28) bereitzustellen.

11. Betriebsweise nach Anspruch 10, wobei der überhitzte Dampf mit kondensiertem Wasser von der Dampfturbine (34) gemischt wird, um das vorerhitzte Speisewasser bereitzustellen.

12. Betriebsweise nach Anspruch 11, wobei das kondensierte Wasser direkt von der Dampfturbine (34), ohne Vorerhitzen, zum Mischen mit dem überhitzten Dampf bereitgestellt wird.

13. Betriebsweise nach einem der Ansprüche 10 bis 12, wobei der überhitzte Dampf und das Wasser in einer Vorheizvorrichtung (54) gemischt werden.

14. Betriebsweise nach einem der Ansprüche 10 bis 13, wobei das vorerhitzte Speisewasser während des Zirkulationsschrittes in dem Solarstrahlungsempfänger (28) erhitzt wird, um den überhitzten Dampf zu erzeugen.

15. Betriebsweise nach Anspruch 9, wobei der überhitzte Dampf, nachdem er aus dem Wärmetauscher (48) austritt, zur Ausdehnung in der Dampfturbine (34) an diese bereitgestellt wird.

## Revendications

1. Centrale héliothermique (20) comprenant :
une tour (22) ;
une pluralité d'héliostats (26) entourant la tour et formant un champ d'héliostats (24) ;
un récepteur de rayonnement solaire (28) monté sur la tour (22) pour recevoir le rayonnement solaire réfléchi par le champ d'héliostats (24) ;
un circuit de génération de puissance (30) comportant une turbine à vapeur (34) pour entraîner un générateur électrique (36) pour produire de la puissance électrique, de l'eau circulant à travers le récepteur de rayonnement solaire (28) étant susceptible d'être chauffée directement par le rayonnement solaire réfléchi sur le récepteur de rayonnement solaire (28) par le champ d'héliostats (24) pour générer de la vapeur surchauffée pour entraîner la turbine à vapeur (34) ;
un circuit de stockage d'énergie (42) comportant un fluide de stockage d'énergie thermique et un échangeur de chaleur (48) pour recevoir une proportion de vapeur surchauffée détournée du circuit de génération de puissance (30) et pour transférer de la chaleur de la vapeur surchauffée détournée au fluide de stockage d'énergie thermique ;
**caractérisée en ce que** l'échangeur de chaleur (48) peut fonctionner de manière à refroidir la vapeur surchauffée détournée jusqu'à une température supérieure à sa température de saturation de telle sorte que la vapeur sorte de l'échangeur de chaleur (48) dans son état surchauffé.

2. Centrale héliothermique selon la revendication 1, dans laquelle l'échangeur de chaleur (48) peut fonctionner de manière à refroidir la vapeur surchauffée détournée jusqu'à une température comprise entre environ 330°C et 350°C à la sortie de l'échangeur de chaleur (48) lorsque la pression de vapeur est d'environ 140 bar.

3. Centrale héliothermique selon la revendication 1 ou la revendication 2, la centrale héliothermique (20) comportant un dispositif de préchauffage (54) pour fournir de l'eau d'alimentation préchauffée au récepteur de rayonnement solaire (28), le dispositif de préchauffage (54) pouvant fonctionner de manière à mélanger la vapeur surchauffée provenant de l'échangeur de chaleur (48) avec de l'eau pour produire l'eau d'alimentation préchauffée.

4. Centrale héliothermique selon la revendication 3, dans laquelle la température de l'eau d'alimentation préchauffée fournie par le dispositif de préchauffage (54) au récepteur de rayonnement solaire (28) est comprise entre environ 240°C et 320°C.

5. Centrale héliothermique selon la revendication 3 ou la revendication 4, dans laquelle le dispositif de préchauffage (54) peut fonctionner de manière à mélanger la vapeur surchauffée provenant de l'échangeur de chaleur (48) avec de l'eau condensée provenant de la turbine à vapeur (34) pour produire l'eau d'alimentation préchauffée.

6. Centrale héliothermique selon la revendication 5, dans laquelle l'eau condensée est fournie à partir d'un condenseur (38), positionné en aval de la turbine à vapeur (34), directement au dispositif de préchauffage (54).

7. Centrale héliothermique selon la revendication 5 ou la revendication 6, dans laquelle la température de l'eau condensée est comprise entre environ 50°C et 80°C.

8. Centrale héliothermique selon la revendication 1 ou la revendication 2, la centrale héliothermique (20) étant conçue pour fournir la vapeur surchauffée sortant de l'échangeur de chaleur (48) à la turbine à vapeur (34) en vue de la détente dans la turbine à vapeur (34).

9. Procédé de fonctionnement d'une centrale héliothermique (20), la centrale comprenant :
une tour (22) ;
une pluralité d'héliostats (26) entourant la tour et formant un champ d'héliostats (24) ;
un récepteur de rayonnement solaire (28) monté sur la tour (22) pour recevoir le rayonnement solaire réfléchi par le champ d'héliostats (24) ;
un circuit de génération de puissance (30) comportant une turbine à vapeur (34) pour entraîner un générateur électrique (36) pour produire de la puissance électrique ; et
un circuit de stockage d'énergie (42) comportant un fluide de stockage d'énergie thermique et un échangeur de chaleur (48) pour recevoir de la vapeur surchauffée détournée du circuit de génération de puissance (30) et pour transférer de la chaleur de la vapeur surchauffée au fluide de stockage d'énergie thermique ;
le procédé de fonctionnement comprenant les étapes consistant à :
faire circuler de l'eau à travers le récepteur de rayonnement solaire (28) de telle sorte que l'eau soit chauffée directement par le rayonnement solaire réfléchi sur le récepteur de rayonnement solaire (28) par le champ d'héliostats (24) pour générer de la vapeur surchauffée ;
fournir une première proportion de la vapeur surchauffée à la turbine à vapeur (34) dans le circuit de génération de puissance (30) ; et
détourner une deuxième proportion de la vapeur surchauffée vers l'échangeur de chaleur (48) dans le circuit de stockage d'énergie (42) ;
**caractérisé en ce que** la vapeur surchauffée détournée est refroidie dans l'échangeur de chaleur (48) jusqu'à une température supérieure à sa température de saturation de telle sorte que la vapeur sorte de l'échangeur de chaleur (48) dans son état surchauffé.

10. Procédé de fonctionnement selon la revendication 9, dans lequel, après que la vapeur surchauffée est sortie de l'échangeur de chaleur (48), la vapeur surchauffée est mélangée avec de l'eau pour produire de l'eau d'alimentation préchauffée pour le récepteur de rayonnement solaire (28).

11. Procédé de fonctionnement selon la revendication 10, dans lequel la vapeur surchauffée est mélangée avec de l'eau condensée provenant de la turbine à vapeur (34) pour produire l'eau d'alimentation préchauffée.

12. Procédé de fonctionnement selon la revendication 11, dans lequel l'eau condensée est fournie directement à partir de la turbine à vapeur (34), sans préchauffage, en vue du mélange avec la vapeur surchauffée.

13. Procédé de fonctionnement selon l'une quelconque des revendications 10 à 12, dans lequel la vapeur surchauffée et l'eau sont mélangées dans un dispositif de préchauffage (54).

14. Procédé de fonctionnement selon l'une quelconque des revendications 10 à 13, dans lequel l'eau d'alimentation préchauffée est chauffée dans le récepteur de rayonnement solaire (28) pendant ladite étape de circulation pour générer la vapeur surchauffée.

15. Procédé de fonctionnement selon la revendication 9, dans lequel, après que la vapeur surchauffée est sortie de l'échangeur de chaleur (48), la vapeur surchauffée est fournie à la turbine à vapeur (34) en vue de la détente dans celle-ci.
